# EUROPÄISCHE PATENTSCHRIFT

(11) **EP 1 136 164 B1**
(45) Veröffentlichungstag und Bekanntmachung des Hinweises auf die Patenterteilung: **19.01.2005**
(21) Anmeldenummer: 01104550.7
(22) Anmeldetag: 05.03.2001
(51) Int. Cl.: B23D 53/04, B23D 59/00

(54) **Verfahren und Sägeeinrichtung zum Abtrennen von Profilabschnitten**
Method and sawing device for cutting profile members
Procédé et dispositf de sciage pour couper des éléments profilés

(30) Priorität: 15.03.2000 DE 10012548
(43) Veröffentlichungstag der Anmeldung: 26.09.2001
(73) Patentinhaber: Hennecke GmbH, 51379 Leverkusen (DE)
(72) Erfinder: Sulzbach, Hans-Michael, 53639 Königswinter (DE); Schlug, Hans-Walter, 53797 Lohmar (DE)
(74) Vertreter: Feldhues, Michael L.F., Dr.

(56) Entgegenhaltungen:
- DE-A- 2 130 249
- DE-A- 3 500 751
- DE-A- 3 724 321

## Beschreibung

Die Erfindung betrifft ein Verfahren gemäß dem Oberbegriff von Anspruch 1 und eine Sägeeinrichtung gemäβ dem Oberbegriff von Anspruch 6 zum Abtrennen von Profilabschnitten definierter Länge von einem endlos gefertigten Strangprofil (DE 35 00 751 C2).

Derartige Strangprofile bzw. Profilabschnitte mit Hartschaumstoffkern weisen in der Regel Metallblech-Deckschichten auf oder weichere Deckschichten, wie beispielsweise Dachpappe, Karton, Papier. Insbesondere bei Metall-Deckschichten reichen deren Ränder meist über den Hartschaumstoffkern hinaus und sind profiliert, so dass man die einzelnen Profilabschnitte beispielsweise zu Wänden oder Dächern zusammenfügen kann.

Abgesehen von der Art der Deckschichten und der Dicke des Hartschaumstoffkernes werden derartige Profilabschnitte in verschiedenen Längen und Breiten benötigt, wodurch eine rationelle Fertigung erschwert wird. Dabei erfolgt die Herstellung des Strangprofils auf einem sogenannten Doppeltransportband, welchem die Sägeeinrichtung nachgeordnet ist.

Die mögliche Schnittgeschwindigkeit hängt von der Art der Deckschichten ab und ist ohne größeren Zeitaufwand einstellbar. In jedem Falle ist zu vermeiden, dass durch das Sägeblatt die Deckschichten einreißen, was durch falsche, meist zu hohe Wahl der Schnittgeschwindigkeit passieren kann. Deshalb beginnt der Schnitt meist bei niedrigerer Geschwindigkeit, welche dann erhöht wird. Zum Schnittende hin senkt man die Schnittgeschwindigkeit wieder ab. Dabei wird das Strangprofil in üblicher Weise mit konstanter Vorschubgeschwindigkeit ohne Unterbrechung kontinuierlich hergestellt. Während jenes Vorschubweges, welcher der Länge eines abzutrennenden Profilabschnittes entspricht, muss sowohl der Schneidvorgang als auch der Rückfahrvorgang abgeschlossen sein.

Das Doppeltransportband muss auf die jeweils zu fertigende Strangprofilbreite eingestellt werden. Bei der Sägeeinrichtung, welche für die maximale Strangprofilbreite ausgelegt ist, geht viel Zeit für das Querfahren vor und über den eigentlichen Schnitt hinaus verloren. Diese verlorene Zeit addiert sich zu jener Zeit, welche der Sägeeinrichtung für die Rückfahrstrecke zur Verfügung steht. Dadurch wird das Abtrennen von Profilabschnitten unterhalb einer gewissen Minimallänge unmöglich .

Es liegt auf der Hand, dass man den gesamten Querfahrweg der Sägeeinrichtung der jeweiligen Strangprofilbreite anpassen könnte. Dann könnte man auch Strangprofilabschnitte kleinerer Länge abtrennen, aber die jeweilige Umbauzeit ist erheblich und wird deshalb gescheut. Auch ist ein Umbau für kleine Serien unrentabel.

Es ist Aufgabe der Erfindung, ein Verfahren der oben genannten Art zu schaffen, bei welchem ein Teil der Querfahrzeit der Sägeeinrichtung eingespart wird, wobei wesentliche Umbauzeiten entfallen, so dass es auf rentable Weise möglich wird, auch Strangprofilabschnitte sehr kleiner Länge abzutrennen, und zwar auch bei kleinerer Serie.

Die Aufgabe wird durch ein Verfahren gemäß Anspruch 1 und eine Vorrichtung gemäß Anspruch 6 gelöst.

Dabei ist die Schnittanfangsposition jeweils jener Punkt, welcher sich unmittelbar vor dem Rand des Strangprofils befindet bzw. welcher unmittelbar vor dem Schnittbeginn liegt. Dadurch, dass man das erneute und optimale Positionieren des Sägeblattes in die Rückfahrzeit verlegt hat, wird die Gesamtzeit zwischen zwei Schnitten kürzer, so dass auch sehr kurze Profilabschnitte abgetrennt werden können.

Vorzugsweise wird bei der Einstellung der optimalen Schnittanfangspositionen ein Sicherheitsabstand von den Rändern des Strangprofils zugeschlagen.

Dadurch wird ungewolltes Einhaken des Sägeblattes in die Deckschichten und deren Verletzung vermieden. Theoretisch ist zwar die Schnittanfangsposition für jeden Schnitt exakt der seitliche Rand des Strangprofils. In der Praxis wählt man aber deshalb in vorteilhafter Weise jeweils diesen zuzüglichen Sicherheitsabstand vom Rande dieses Strangprofils von wenigen Millimetern, normalerweise etwa von 3 bis 6 mm. Dieser Sicherheitsabstand ist auch davon abhängig, inwieweit das vorgeordnete Doppeltransportband ein Querwandern des Strangprofils verursacht bzw. zulässt. Es trägt natürlich zur Optimierung bei, wenn man diesen Sicherheitsabstand so klein wie möglich halten kann.

Es versteht sich, dass die entsprechenden Werte je Profilart zunächst einmalig ermittelt und in die Programmsteuerung eingespeist werden müssen, was zwar Aufwand bedeutet, welcher sich aber wegen der immer wiederkehrenden Palette der herzustellenden Profilabschnitte rasch amortisiert.

Vorzugsweise wird die Schnittanfangsposition durch eine darauf eingestellte Sensorik erfasst.

D.h., erreicht das Sägeblatt beim Rücklauf der Sägeeinrichtung jenen Punkt für die optimale Schnittanfangsposition, auf welchen die Sensorik durch die Programmsteuerung eingestellt wurde, so wird die Querfahrt der Sägeeinrichtung gestoppt, so dass das Sägeblatt exakt in dieser Schnittanfangsposition steht. Diese Schnittanfangsposition muss vom Sägeblatt spätestens mit dem Ende des Rücklaufes der Sägeeinrichtung eingenommen worden sein.

Alternativ hierzu wird die unmittelbar vor dem Rande des Strangprofils gelegene, optimale Schnittanfangsposition durch ein darauf eingestelltes Wegmess-System erfasst.

D.h., erreicht das Sägeblatt beim Rücklauf der Sägeeinrichtung jenen Punkt für die optimale Schnittanfangsposition, auf welchen das Wegmess-System durch die Programmsteuerung eingestellt worden ist, so wird die Querfahrt der Sägeeinrichtung gestoppt, so dass das Sägeblatt exakt in dieser Schnittanfangsposition steht. Diese Schnittanfangsposition muss vom Sägeblatt spätestens mit dem Ende des Rücklaufs der Sägeeinrichtung eingenommen worden sein.

Je eher in beiden Fällen das Sägeblatt jeweils in der Schnittanfangsposition steht, desto kürzere Profilabschnitte lassen sich abtrennen.

Gemäß einer besonderen Durchführungsform des neuen Verfahrens wird das Sägeblatt und eine an sich bekannte, dahinter angeordnete Entgrateinrichtung jeweils so weit aus dem Strangprofil herausgefahren, dass beide zusammen gewendet werden können.

In diesem Falle kann mit dem Wenden des Sägeblattes frühestens begonnen werden, wenn auch die Entgrateinrichtung den Bereich des Strangprofils verlassen hat.

Es versteht sich, dass, wie bekannt, das Sägeblatt nur während des Schneidvorganges umlaufen soll, weil jeder unnötige Umlauf Verschleiß erzeugt.

Die neue Sägeeinrichtung zum Abtrennen von Profilabschnitten definierter Länge geht aus von einem auf einem vorgeordneten Doppeltransportband endlos gefertigten Strangprofil mit einem zwischen zwei Deckschichten angeordneten Hartschaumstoffkern, wobei diese Sägeeinrichtung während des Abtrennens eines Profilabschnittes mit dem Strangprofil mit dessen Vorschubgeschwindigkeit parallel verfahrbar ist; diese Sägeeinrichtung nach dem Abtrennen mit erhöhter Geschwindigkeit zurückfahrbar ist und wobei das Sägeblatt dieser Sägeeinrichtung nach dem Abtrennen eines Profilabschnittes umwendbar ist.

An diesen optimalen Schnittanfangspositionen steht das Sägeblatt für den folgenden Schnitt bereit, und zwar gegebenenfalls samt Sicherheitsabstand von den Rändern des Strangprofils. Damit wird die vorrichtungstechnische Voraussetzung auch für die Herstellung sehr kurzer Profilabschnitte geschaffen, und zwar bei minimalen Einstellzeiten. Als Sägeeinrichtung eignen sich bekannter Weise solche mit einem umwendbaren endlosen, über Leitrollen umlaufenden Sägeblatt oder solche mit einem scheibenartigen Kreissägeblatt.

Vorzugsweise bestehen die Wegerfassungselemente aus einer Sensorik.

Geeignete Sensorikelemente sind beispielsweise in den Firmenschriften der Firma Gebhard Balluff GmbH & Co., Gartenstr. 21-25, D-73765 Neuhausen/Filder, Nr. 8124464 D, Ausgabe 9804, insbesondere Seite 2.3, sowie Nr. 817545, Ausgabe 9910, beschrieben.

Alternativ bestehen die Wegerfassungselemente aus einem Wegmess-System.

Geeignete Wegmess-Systeme sind beispielsweise in der Firmenschrift Nr. 811506 D, Ausgabe 9801, der vorgenannten Firma beschrieben.

In der Zeichnung ist die Vorrichtung unter Bezugnahme auf das Verfahren beispielsweise und rein schematisch dargestellt. Es zeigen:
- Fig. 1: Die Sägeeinrichtung zum Abtrennen definierter Profilabschnitte von einem auf einem Doppeltransportband endlos hergestellten Strangprofil in der Seitenansicht,
- Fig.2: die Sägeeinrichtung mit Entgrateinrichtung in der optimalen rechten Schnittanfangsposition mit angedeuteter Sensorik, und zwar im Schnitt,
- Fig. 3: die Sägeeinrichtung mit Entgrateinrichtung gemäß Fig. 2 in der optimalen linken Schnittanfangsposition mit Sensorik, und zwar im Schnitt,
- Fig. 4: ein auf Fig. 3 bezogenes Weg-Zeit-Diagramm für die Schnittgschwindigkeit,
- Fig. 5: die Sägeeinrichtung in etwas ausführlicherer Darstellung mit Entgrateinrichtung in der linken optimalen Schnittanfangsposition mit angedeutetem Wegmess-System, und zwar im Schnitt, und
- Fig. 6: ein auf Fig. 5 bezogenes Weg-Zeit-Diagramm für die Schnittgeschwindigkeit.

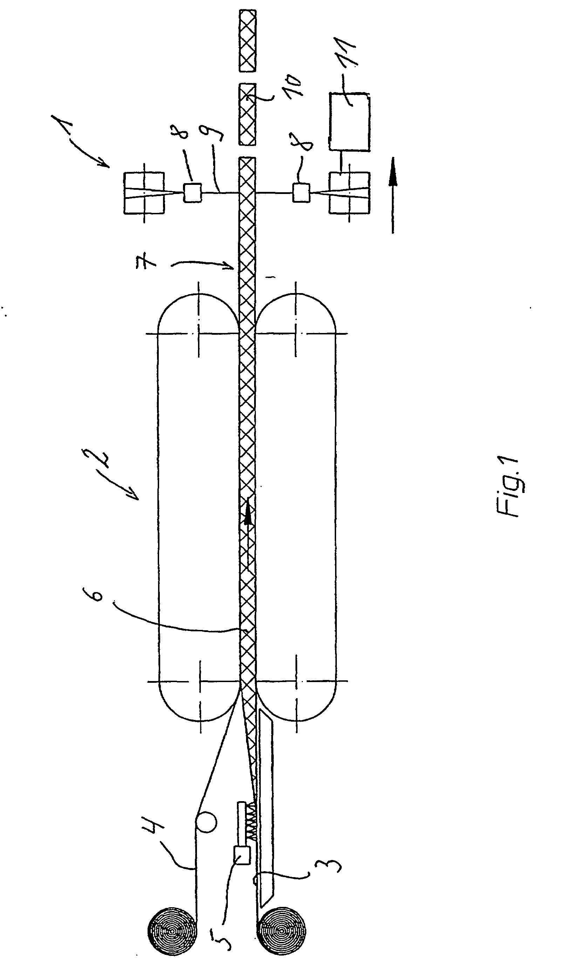

In Fig. 1 ist einer Sägeeinrichtung 1 ein sogenanntes Doppeltransportband 2 vorgeordnet. In dieses werden eine untere Deckschicht 3 und eine obere Deckschicht 4, beide aus Metallblech, eingeführt, wobei auf die untere Deckschicht 3 mittels eines Mischkopfes 5 ein Polyurethan-Hartschaumstoff bildendes Polyurethan-Reaktionsgemisch aufgetragen wird, welches zwischen den Deckschichten 3, 4 zu einem Hartschaumstoffkern 6 aufschäumt, so dass ein endloses Strangprofil 7 erzeugt wird. Die Sägeeinrichtung 1 weist Wendevorrichtungen 8 für ihr Sägeblatt 9 auf. Die abgetrennten Profilabschnitte sind mit 10 und eine angedeutete Programmsteuerung mit 11 bezeichnet.

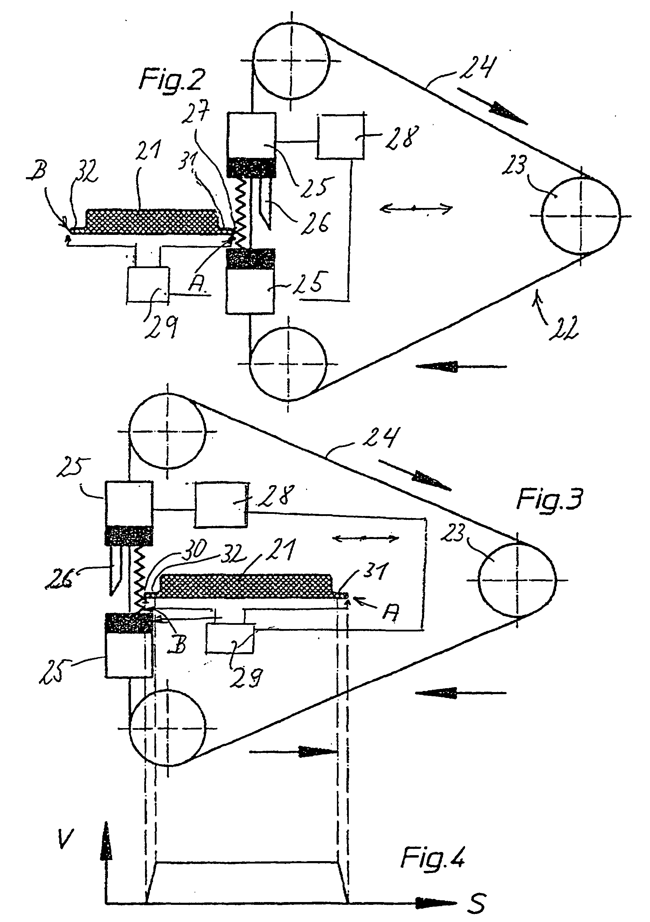

In Fig. 2 ist einem Strangprofil 21 eine Sägeeinrichtung 22 zum Abtrennen von Profilabschnitten definierter Länge zugeordnet. Über Rollen 23 läuft ein Sägeblatt 24 um, welches nach jedem Schnitt gewendet wird, so dass bei jeder Fahrt quer zum Strangprofil 21 ein Schnitt erfolgen kann. Dem Sägeblatt 24 ist eine Wendevorrichtung 25 zugeordnet, an welcher eine Entgratvorrichtung 26 angeordnet ist. Das Sägeblatt 24 steht in der optimalen Schnittanfangsposition unmittelbar vor dem rechten Rand 27 des Strangprofils 21, um dieses von rechts nach links durchzutrennen. Diese rechte Schnittanfangsposition A ist durch eine auf die Mittellinie des Strangprofils 21 als Referenzpunkt bezogene Programmsteuerung 28 mit einem als Sensorik 29 ausgebildeten Wegerfassungssystem eingestellt worden.

In Fig. 3 befindet sich das über Rollen 23 umlaufende Sägeblatt 24 der Sägeeinrichtung 22 in der optimalen linken Schnittanfangsposition B unmittelbar vor dem linken Rand 30, um das Strangprofil 21 von links nach rechts durchzutrennen. Auch hier ist die linke optimale Schnittanfangsposition B durch die Programmsteuerung 28 mit einem als Sensorik 29 ausgebildeten Wegerfassungssystem eingestellt worden. Die Wendevorrichtung ist auch hier mit 25 und die Entgrateinrichtung mit 26 bezeichnet.

Fig. 4 zeigt das auf Fig. 3 bezogene Weg-Zeit-Diagramm, gemäß welchem die Schnittgeschwindigkeit am Anfang und am Ende des Weges durch das Strangprofil 21 geringer ist als im mittleren Teil. Hier fällt die geringere Geschwindigkeit mit den dünneren Randzonen 31, 32 des Strangprofils zusammen, was aber nicht unbedingt sein muss. Wichtig ist nur, dass die Anfangsschnittgeschwindigkeit sowie die Endschnittgeschwindigkeit so gewählt werden, dass ein Ausreißen der Ränder des Strangprofils 21 beim Schnitt vermieden wird.

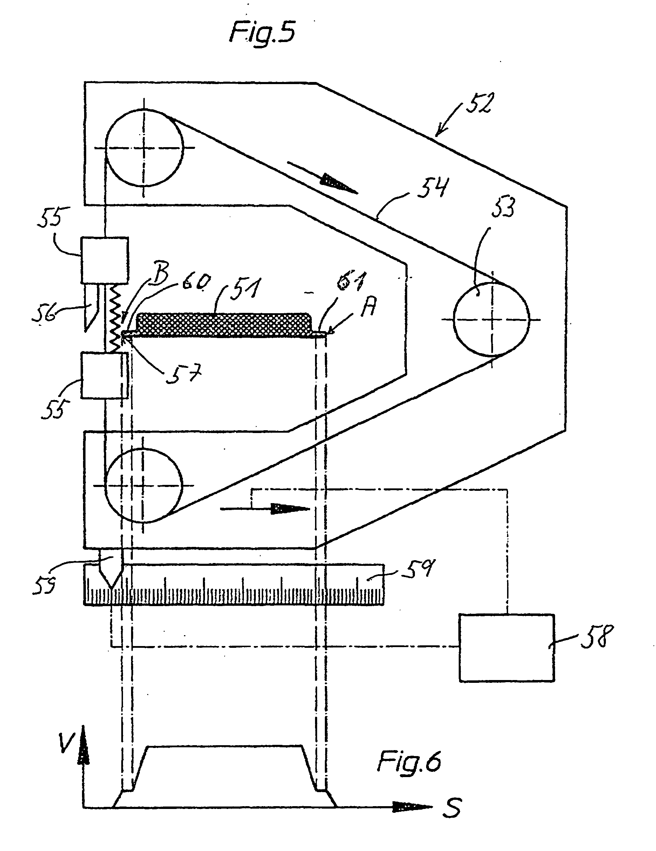

In Fig. 5 ist einem Strangprofil 51 eine Sägeeinrichtung 52 zum Abtrennen von Profilabschnitten definierter Länge zugeordnet. Über Rollen 53 läuft ein Sägeblatt 54 um, welches nach jedem Schnitt gewendet wird, so dass bei jeder Fahrt quer zum Strangprofil 51 ein Schnitt erfolgen kann. Dem Sägeblatt 54 ist eine Wendevorrichtung 55 zugeordnet, an welcher eine Entgratvorrichtung 56 angeordnet ist. Es steht in der linken optimalen Schnittanfangsposition B unmittelbar vor dem linken Rand 57 des Strangprofils 51, um dieses von links nach rechts durchzutrennen. Diese Schnittanfangsposition B ist durch eine auf die Mittellinie des Strangprofils 51 als Referenzpunkt bezogene Programmsteuerung 58 mit einem als Wegmess-System 59 ausgebildeten Wegerfassungssystem eingestellt worden. Die optimale Schnittposition jenseits der Strangprofilbreite ist mit A bezeichnet.

Fig. 6 zeigt das auf Fig. 5 bezogene Weg-Zeit-Diagramm. Hier ist die optimale Schnittanfangsposition A mit einem Sicherheitsabstand von 4 mm zum linken Rand 57 des Strangprofils 51 eingestellt. In diesem Bereich des Sicherheitsabstandes wird die Anfangsgeschwindigkeit des Sägeblattes 54 zunächst beschleunigt und verläuft beim Schneiden der dünnen Randzone 60 linear. Dann wird sie wieder beschleunigt und anschließend verläuft sie über den größten Teil der Breite des Strangprofils 51 erneut linear. Schließlich nimmt die Schnittgeschwindigkeit wieder spiegelsymmetrisch ab, und zwar wird sie zunächst gegen Ende des Strangprofils verzögert, verläuft dann über die Breite der Randzone 61 linear und nimmt in dem darauffolgenden Bereich des Sicherheitsabstandes wieder auf Null ab. Dadurch wird ein Einreißen des Strangprofils 51 vermieden.

Bei allen Figuren wurde der Übersichtlichkeit halber auf die Darstellung der Sicherheitsabstände der optimalen Schnittanfangspositionen von den Rändern des Strangprofils verzichtet, zumal dies leicht vorstellbar ist.

Es versteht sich, dass eine Darstellung der Sägeeinrichtung 52 mit ihrem Sägeblatt 54 in der optimalen Schnittanfangsposition B vor dem rechten Rand 27 des Strangprofils 51 wegen der Aussagekraft der im wesentlichen ähnlichen Fig. 2 nicht notwendig ist. Dies gilt auch für die spiegelsymmetrisch gelegene, rechte optimale Schnittanfangsposition A.

## Patentansprüche

1. Verfahren zum Abtrennen von Profilabschnitten (10) definierter Länge von einem endlos gefertigten Strangprofil (7; 21; 51) mit einem zwischen zwei Deckschichten (3, 4) angeordneten Hartschaumstoffkern (6), wobei eine Sägeeinrichtung (1; 22; 52) mit ihrem Sägeblatt (9; 24; 54) in Schnittposition gebracht und mit der Vorschubgeschwindigkeit des Strangprofils (7; 21; 51) zu diesem parallel und zum Abtrennen eines Profilabschnittes (10) gleichzeitig quer verfahren wird; wobei nach dem Schnitt sofort nachdem das Sägeblatt (9; 24; 54) einen Profilabschnitt (10) abgetrennt hat, die Sägeeinrichtung (1; 22; 52) zurückgefahren und dabei das Sägeblatt (9; 24; 54) gewendet wird; und das Sägeblatt (9; 24; 54) dann erneut in Schnittposition gebracht wird und mit der Vorschubgeschwindigkeit des Strangprofils (7; 21; 51) zu diesem parallel und zum Abtrennen des nächsten Profilabschnittes (10) gleichzeitig in entgegengesetzter Richtung quer verfahren wird, **dadurch gekennzeichnet, dass** für jede neue Strangprofilbreite durch eine einstellbare Programmsteuerung (11; 28; 58) auf einen Referenzpunkt bezogene, optimale Schnittanfangspositionen (A, B) unmittelbar vor den Rändern (27; 30; 57) des Strangprofils (7; 21; 51) festgelegt werden; und dass die Sägeeinrichtung (1; 22; 52) gleichzeitig während des Rückfahrens in die nächste optimale Schnittanfangsposition (A, B) quer zur Transportrichtung des Strangprofils gebracht wird.

2. Verfahren nach Anspruch 1, **dadurch gekennzeichnet, dass** bei der Einstellung der optimalen Schnittanfangspositionen (A, B) ein Sicherheitsabstand zu den Rändern (27; 30; 57) zugeschlagen wird.

3. Verfahren nach Anspruch 1 oder 2, **dadurch gekennzeichnet, dass** die unmittelbar vor dem Rand (27; 30) des Strangprofils (21) gelegene, optimale Schnittanfangsposition (A, B) durch eine darauf eingestellte Sensorik (29) erfasst wird.

4. Verfahren nach Anspruch 1 oder 2, **dadurch gekennzeichnet, dass** die unmittelbar vor dem Rand (57) des Strangprofils (51) gelegene, optimale Schnittanfangsposition (A, B) durch ein darauf eingestelltes Wegmess-System (59) erfasst wird.

5. Verfahren nach einem der Ansprüche 1 bis 4, **dadurch gekennzeichnet, dass** das Sägeblatt (24; 54) und eine dahinter angeordnete Entgrateinrichtung (26; 56) jeweils so weit aus dem Strangprofil (21; 51) herausgefahren werden, dass beide zusammen gewendet werden können.

6. Sägeeinrichtung (1; 22; 52) zum Abtrennen von Profilabschnitten (10) definierter Länge von einem auf einem vorgeordneten Doppeltransportband (2) endlos gefertigten Strangprofil (7; 21; 51) mit einem zwischen zwei Deckschichten (3, 4) angeordneten Hartschaumstoffkern (5), wobei diese Sägeeinrichtung (1; 22; 52) während des Abtrennens eines Profilabschnittes (10) mit dem Strangprofil (7; 21; 51) mit dessen Vorschubgeschwindigkeit parallel verfahrbar ist und nach dem Abtrennen mit erhöhter Geschwindigkeit zurückfahrbar ist, wobei das Sägeblatt (9; 24; 54) dieser Sägeeinrichtung (1; 22; 52) nach dem Abtrennen eines Profilabschnittes (10) umwendbar ist, **dadurch gekennzeichnet, dass** diese Sägeeinrichtung (1; 22; 52) Wegerfassungsselemente (29; 59) besitzt, durch welche sie mittels einer Programmsteuerung (11; 28; 58) auf eine optimale Schnittanfangsposition (A, B) quer zur Transportrichtung des Strangprofils einstellbar ist.

7. Sägeeinrichtung nach Anspruch 6, **dadurch gekennzeichnet, dass** die Wegerfassungselemente (29) jeweils aus einer Sensorik (29) bestehen.

8. Sägeeinrichtung nach Anspruch 6, **dadurch gekennzeichnet, dass** die Wegerfassungselemente (59) aus einem Wegmess-System (59) bestehen.

## Claims

1. A method of severing profile sections (10) of defined length from a continuously produced strand profile (7; 21; 51) having a rigid foam core (6) arranged between two outer layers (3, 4), wherein a sawing means (1; 22; 52) is brought with its saw blade (9; 24; 54) into the cutting position and is moved at the feed velocity of the strand profile (7; 21; 51) parallel thereto and, for severing of a profile section (10), at the same time perpendicularly thereto; wherein, after cutting, immediately after the saw blade (9; 24; 54) has severed a profile section (10), the sawing means (1; 22; 52) is retracted and at the same time the saw blade (9; 24; 54) is turned; and the saw blade (9; 24; 54) is then brought once again into the cutting position and is moved at the feed velocity of the strand profile (7; 21; 51) parallel thereto and, for severing of the next profile section (10), at the same time in the opposite direction perpendicularly thereto, **characterised in that**, for each new strand profile width, optimum cutting start positions (A, B) immediately before the edges (27; 30; 57) of the strand profile (7; 21; 51) and related to a reference point are set by an adjustable program control system (11; 28; 58), and **in that**, at the same time as retraction, the sawing means (1; 22; 52) is brought into the next optimum cutting start position (A, B) perpendicular to the conveying direction of the strand profile.

2. A method according to claim 1, **characterised in that**, when setting the optimum cutting start positions (A, B), a safety margin is added to the edges (27; 30; 57).

3. A method according to claim 1 or claim 2,
**characterised in that** the optimum cutting start position (A, B), located immediately before the edge (27; 30) of the strand profile (21), is detected by a sensor system (29) adjusted thereto.

4. A method according to claim 1 or claim 2,
**characterised in that** the optimum cutting start position (A, B), located immediately before the edge (57) of the strand profile (51), is detected by a position-measuring system (59) adjusted thereto.

5. A method according to one of claims 1 to 4,
**characterised in that** the saw blade (24; 54) and a deburring means (26; 56) arranged behind it are each withdrawn so far from the strand profile (21; 51) that the two may be turned together.

6. A sawing means (1; 22; 52) for severing profile sections (10) of defined length from a strand profile (7; 21; 51) produced continuously on an upstream twin belt (2) and having a rigid foam core (5) arranged between two outer layers (3, 4), wherein, during severing of a profile section (10), said sawing means (1; 22; 52) may be moved at the feed velocity of the strand profile (7; 21; 51) parallel thereto and, after severing, may be retracted at a higher velocity, wherein the saw blade (9; 24; 54) of this sawing means (1; 22; 52) may be turned round after severing of a profile section (10), **characterised in that** this sawing means (1; 22; 52) has position-detecting elements (29; 59), by means of which it may be adjusted by means of a program control system (11; 28; 58) to an optimum cutting start position (A, B) perpendicular to the conveying direction of the strand profile.

7. A sawing means according to claim 6, **characterised in that** the position-detecting elements (29) each consist of a sensor system (29).

8. A sawing means according to claim 6, **characterised in that** the position-detecting elements (59) consist of a position-measuring system (59).

## Revendications

1. Procédé de coupe de tronçons de profilés (10) de longueur définie dans un profilé extrudé (7 ; 21 ; 51) réalisé en continu avec une âme de mousse rigide (6) agencée entre deux couches de protection (3, 4), dans lequel procédé un dispositif de sciage (1 ; 22 ; 52) est amené avec sa lame de scie (9 ; 24 ; 54) en position de coupe et est déplacé avec la vitesse d'avance du profilé extrudé (7 ; 21 ; 51) parallèlement à celui-ci et, en même temps, transversalement pour couper à longueur un tronçon de profilé (10), sachant qu'après la coupe, immédiatement après que la lame de scie (9 ; 24 ; 54) ait coupé à longueur un tronçon de profilé (10), le dispositif de sciage (1 ; 22 ; 52) est ramené en position initiale et, dans ce cas, la lame de scie (9 ; 24 ; 54) change de direction, puis la lame de scie (9 ; 24 ; 54) est à nouveau amenée en position de coupe et déplacée avec la vitesse d'avance du profilé extrudé (7 ; 21 ; 51) parallèlement à celui-ci et, en même temps, transversalement dans la direction opposée pour couper à longueur le tronçon de profilé (10) suivant, **caractérisé en ce que**, pour chaque nouvelle largeur de profilé extrudé, des positions optimales de départ de coupe (A, B) directement devant les bords (27 ; 30 ; 57) du profilé extrudé (7 ; 21 ; 51) sont définis par rapport à un point de référence au moyen d'une commande de programme (11 ; 28 ; 58), et **en ce que** le dispositif de sciage (1 ; 22 ; 52), en même temps que le retour en position initiale, est amené dans la position optimale de départ de coupe (A, B) suivante transversalement au sens de transport du profilé extrudé.

2. Procédé selon la revendication 1, **caractérisé en ce que**, pendant le réglage des positions optimales de départ de coupe (A, B), une distance de sécurité est ajoutée aux bords (27 ; 30 ; 57).

3. Procédé selon la revendication 1 ou 2, **caractérisé en ce que** la position optimale de départ de coupe (A, B), située directement devant le bord (27 ; 30) du profilé extrudé (21), est détectée par un système de capteur (29) réglé en conséquence.

4. Procédé selon la revendication 1 ou 2, **caractérisé en ce que** la position optimale de départ de coupe (A, B), située directement devant le bord (57) du profilé extrudé (51), est détectée par un système de mesure du déplacement (59) réglé en conséquence.

5. Procédé selon l'une quelconque des revendications 1 à 4, **caractérisé en ce que** la lame de scie (24 ; 54) et un dispositif d'ébavurage (26 ; 56), monté en aval de celle-ci, sont déplacés hors du profilé extrudé (21 ; 51) sur une distance telle que tous deux peuvent conjointement changer de direction.

6. Dispositif de sciage (1 ; 22 ; 52) destiné à couper des tronçons de profilés (10) de longueur définie dans un profilé extrudé (7 ; 21 ; 51) réalisé en continu sur un double tapis de transport (2) et comportant une âme de mousse rigide (5) agencée entre deux couches de protection (3, 4), ledit dispositif de sciage (1 ; 22 ; 52), pendant la coupe à longueur d'un tronçon de profilé (10), pouvant être déplacé parallèlement au profilé extrudé (7 ; 21 ; 51) avec la vitesse d'avance de celui-ci et pouvant être ramené en position initiale avec une vitesse plus élevée après la coupe à longueur, la lame de scie (9 ; 24 ; 54) de ce dispositif de sciage (1 ; 22 ; 52) pouvant changer de direction après la coupe à longueur d'un tronçon de profilé (10), **caractérisé en ce que** ledit dispositif de sciage (1 ; 22 ; 52) comporte des éléments de détection du déplacement (29 ; 59), par lesquels il peut être réglé, transversalement au sens de transport du profilé extrudé, dans une position optimale de départ de coupe (A, B) au moyen d'une commande de programme (11 ; 28 ; 58).

7. Dispositif de sciage selon la revendication 6, **caractérisé en ce que** les éléments de détection du déplacement (29) sont formés respectivement par un système de capteur (29).

8. Dispositif de sciage selon la revendication 6, **caractérisé en ce que** les éléments de détection du déplacement (59) sont formés par un système de mesure du déplacement (59).
